# EUROPEAN PATENT APPLICATION

(11) **EP 3 964 747 A1**
(43) Date of publication of application: **09.03.2022**
(21) Application number: 20194864.3
(22) Date of filing: 07.09.2020
(51) Int. Cl.: F21K 9/00, B29D 11/00, B33Y 10/00, B33Y 80/00, F21V 3/02, F21V 3/04, F21V 3/06, F21Y 115/10

(54) **3D-PRINTED LIGHT DISTRIBUTOR, AND LUMINAIRE COMPRISING 3D-PRINTED LIGHT DISTRIBUTOR**

(71) Applicant: Signify Holding B.V., 5656 AE Eindhoven (NL)
(72) Inventor: GOMMANS, Hendrikus Hubertus Petrus, 5656 AE Eindhoven (NL)
(74) Representative: Verweij, Petronella Daniëlle

(57) **Abstract**

A luminaire (1) comprising: a casing having an interior (5), and an inner reflective surface (6, 8) facing the interior of the casing, a light source (20) arranged within the interior of the casing, an exit window, arranged to allow transmission of light emitted from said light source (20), a 3D-printed light distributor (300) enclosed within the interior (5) of the casing and the exit window, said 3D-printed light distributor (300) comprising: a tapered structure (100) tapered along an optical axis perpendicular to a base plane and having a base (120) facing the exit window and an apex (110) facing away from the exit window, said tapered structure (100) formed by a plurality of concentric windings (10) formed by a string of 3D-printing material, each winding (10) having a common base shape, and said string having a curved cross-section, the plurality of concentric windings stacked on each other and with gradually decreasing cross-area, such that the gradually decreasing windings define a tapering angle of the tapered structure (100) with respect to the base plane, and such that the plurality of windings (10) form a corrugated light redistributing surface facing the interior (5) of the casing and exposed to light emitted from said light source (20).

## Description

### FIELD OF THE INVENTION

The invention relates to a 3D-printed luminaire with a uniform light exit window, and the method of producing thereof.

### BACKGROUND OF THE INVENTION

For luminaires in general, and more specifically for backlit light emitting devices it is desired to have a uniform light exiting the exit window, with minimal visibility of the peak light intensity from individual light sources. This is typically achieved by utilizing light diffusing elements within the structure of the luminaire. However, using diffusers usually significantly decreases the efficiency of the emitted light.

Additionally, 3D-printing methods, such as Fused deposition modeling (FDM) are novel mass customization manufacturing technologies, that facilitate the production of complex structures which were previously unfeasible, or very time and effort consuming. These technologies have found their way into manufacturing light emitting devices. For instance, US20150021628A1 discloses solid state light emitting devices that include one or more light affecting elements formed on, over, or around at least one solid state light emitter, with the light affecting elements including multiple fused elements embodying plurality of dots, rods, or layers such as may be formed by three-dimensional (3D) printing.

It is therefore desirable to manufacture a luminaire with a uniform light emission with minimal losses by means of 3D-printing.

### SUMMARY OF THE INVENTION

It is an object of the present invention to overcome this problem, and to provide a luminaire, and a method of production of a luminaire that has a uniform light emission, while the amount of losses are minimized.
According to a first aspect of the invention, this and other objects are achieved by providing a luminaire comprising: a casing having an interior, and an inner reflective surface facing the interior of the casing, a light source arranged within the interior of the casing, an exit window, arranged to allow transmission of light emitted from the light source, a 3D-printed light distributor enclosed within the interior of the casing and the exit window, the 3D-printed light distributor comprising: a tapered structure tapered along an optical axis perpendicular to a base plane and having a base facing the exit window and an apex facing away from the exit window, said tapered structure formed by a plurality of concentric windings formed by a string of 3D-printing material, each winding having a common base shape, and said string having a curved cross-section, the plurality of concentric windings stacked on each other and with gradually decreasing cross-area, such that the gradually decreasing windings define a tapering angle of the tapered structure with respect to the base plane, and such that the plurality of windings form a corrugated light redistributing surface facing the interior of the casing and exposed to light emitted from said light source.

According to the invention, windings formed by a string of 3D-printing material are stacked on one another to form the tapered structure of the light distributor. It is noted that in the context of this invention by windings formed by a string of 3D-printed material it is meant to convey a continuous, or alternatively discontinuous string of material extruded from a nozzle of a 3D-printer, and may be referred to as tracks or windings of 3D-printing material unless stated otherwise. When 3D-printing, tracks of material are extruded through a nozzle and may substantially have a cylindrical shape with a curved cross section. The inventors have realized that as a result of this inherited curvature of the surface of the windings, by stacking the printing windings on one another to form the non-planar tapered structure the amount of light incident on the corrugated surface with a grazing incident angle is increased. This may result in an increased amount of Fresnel reflections which may then inhibit a direct travelling path through the body of the tapered structure, hence diffusing the light. This surface may hence be utilized as a light redistributing surface. Diffused light may then be reflected off the inner reflective surface of the luminaire, and exit the exit window, such that the peak intensity of light is significantly reduced, such as for instance 90% of the peak intensity is reduced.

The windings may be stacked on top of each other with a constant rate of winding to winding cross-area reduction between consecutive windings. Alternatively, the change in winding cross-area reduction may differ between at least some of the consecutive windings.
The cross-section of the windings may be curved, having a substantially circular shape, or an elliptical shape, or alternatively any other substantially curved shape. The curvature cross-section of the windings is at least partially determined by the extruding nozzle of the 3D-printer.

According to an embodiment, the tapering angle of the tapered structure is chosen such that an amount of light incident on said corrugated light distributing surface with a grazing angle is maximized.

As the windings decrease in cross-area, the consecutive windings are offset to each other. This offset may define the degree of tapering, or in other words, the tapering angle. By tapering angle it is meant to convey the angle the planes defining the tapered corrugated surface of the tapered structure makes with the base plane. Other terms such as slant angle, or slope are meant to convey the same meaning in the context of this invention unless stated otherwise.

Together with the curved cross-section of the wirings, the tapering angle may play a significant role in maximizing the amount of light incident on the corrugated surface with a grazing incident angle .

According to an embodiment the windings of the tapered structure for a spiral. In the case that the windings are formed by a continuous string of 3D-printing material, the windings of the tapered structure may form a spiral.

Alternatively, according to an embodiment each of the windings of the tapered structure forms a closed loop.

The windings may be separate closed loops, such that each closed loop defines the outline of the cross-area.

According to an embodiment the base of the tapered structure is parallel to the exit window.

It may be that the base is substantially parallel to the exit window. A slight tilt of for example up to 5 degrees may also be regarded as parallel.

According to an embodiment, the light distributor further comprises a 3D-printed planar structure, formed by a plurality of in-plane concentric windings of 3D-printing material stacked adjacent to each other parallel to the base plane, the planar structure having a first surface arranged facing the tapered structure, and a second opposite surface facing away from the interior of the casing.

The planar structure of the light distributor may have a planar structure. Note that by planar it is meant to be substantially planar, and having for instance a slight curvature towards or outwards from the inner side of the luminaire should not be regarded otherwise.

The planar structure may be 3D-printed together or separate from the tapered structure. The planar structure may have a planar corrugated surface formed by the inherent curved cross-section of the printing tracks, which may in turn affect the light redistribution. Alternatively, the planar structure may be provided by other means.

According to an embodiment, the second surface of the planar structure is the exit window of the luminaire.

The second surface of the planar structure may then be sized and fitted to the opening of the luminaire. Alternatively, the luminaire may have an exit window other than the second surface of the planar structure. In this case, the second surface of the planar structure maybe arranged onto and mechanically attached to said exit window. Alternatively, there may be a physical separation between the two.

According to an embodiment, the light distributor comprises optically transparent material.
It may be beneficial to have a light transparent tapered structure, and/or planar structure of the light distributor, such that the material has low loss properties, preferably no absorption, or reflection of the incident light. As a way of example, transparent polycarbonate material with a refractive index of for instance 1.59 may be used.

According to an embodiment, the base shape of the tapered structure is a circle, such that the tapered structure is a conical structure, or wherein the base shape of the tapered structure is a polygon, such that the tapered structure is a pyramidic structure.

A polygon may be for instance a triangle, such that the tapered structure is a triangular pyramid. The polygon may alternatively be a quadratic shape, leading to a quadratic pyramidic structure of the tapered structure. Alternatively, the polygon may have any other number of sides.

Having a hollow conical or pyramidic structure with a tapering angle, such as for instance 45°, may further maximize the amount of grazing incident angle light collecting surfaces, such that the incident light may have a high Fresnel reflection, leading to a substantially larger amount of diffused light. These structures may have a base, arranged proximal to the first surface of the planar structure. They may also have an apex.

The light source may be a point light source. In some embodiments, the light source includes at least one light emitting diode (LED).

In this case it may be beneficial that the light source is arranged along the optical axis of the tapered structure proximal to the apex.

In this case, the apex and the light source are both positioned on the optical axis.

Alternatively, the light source may be a light source which is not a point light source. In this case the tapered structure and the light source may be aligned, or alternatively they may be arranged in some other manner such that the light redirection is optimized according to that specific light source and the specific shape of the tapered structure.

According to an embodiment, the luminaire comprises a plurality of light sources and a plurality of tapered structures.

The plurality of LEDs may be closely packed together so that overall, they represent a point light source. Alternatively, they may be positioned substantially apart, so that each of them represents a single light source.

According to an embodiment, the planar structure has a discoid structure.

The planar structure may be sizably fitted to the base of a conical tapered structure.

Alternatively, the planar structure may have any other geometrical shape. For instance, it may have a triangular shape, and be substantially sizably fitted to the base of a triangular or tetrahedron pyramidic tapered structure.

Alternatively, the planar structure may be larger than the base of a tapered structure.

Alternatively, the planar structure may be sizably fitted to the opening of the luminaire casing.

According to a second aspect of the invention, a method for manufacturing a luminaire, comprising a casing having an interior, a light source, an exit window, and a light distributor, the method comprising the steps of:
- 3D-printing a tapered structure of the light distributor by extruding concentric windings of 3D-printing material stacked on one another forming a hollow conical or a hollow pyramidic structure, said structure having an apex and a base,
- 3D-printing a planar structure of the light distributor by extruding windings of 3D-printing material as in-plane concentric rings having a first surface and a opposite second surface,
- Arranging the apex of the tapered structure facing the light source,
- Arranging the planar structure adjacent to the tapered structure such that the base of the tapered component is proximal to the first surface of the planar structure,
- Providing an inner reflective surface facing the interior of the casing of the luminaire, such that the light distributor and said inner reflective surface define a light mixing chamber,
- Arranging the light source and the light distributor within the interior of the casing, such that the second surface of the planar structure is facing away from the interior of the casing and the light source is enveloped within the light mixing chamber.

Hereby, a luminaire may be at least partially produced by means of 3D-printing in which light is redistributed such that the peak intensity of light exiting the exit surface of the luminaire is substantially reduced.

It may be that the body of the luminaire in its entirety is 3D-printed, including the casing. The inner reflective surface, the first and the planar structures, after which the light source is arranged within the interior of the casing.

According to an embodiment, 3D-printing the first and planar structure of the light distributor in conjunction to one another, such that the base of the tapered structure and the first surface of the planar structure are mechanically connected.

The planar structure may be 3D-printed together with the tapered structure such that they are substantially mechanically attached. Alternatively, they may have a separation between them. The first and planar structures may be 3D-printed from the same material, or alternatively different materials. The planar structure may alternatively be provided not by means of 3D-printing but any other means such as but not limited to molding, for instance molding the planar structure from the same material as the tapered structure, or alternatively from a different material.

It is noted that the invention relates to all possible combinations of features recited in the claims.

### BRIEF DESCRIPTION OF THE DRAWINGS

This and other aspects of the present invention will now be described in more detail, with reference to the appended drawings showing embodiment(s) of the invention.
Figure 1 schematically demonstrates a cross-sectional view of a luminaire.
Figures 2a-2b demonstrate schematic illustrations of a 3D-printed conical structure of a light distributor.
Figure 3 schematically shows a discoid planar structure of the light distributor with a planar structure.
Figure 4 schematically shows an embodiment of a light distributor.
Figures 5a-5f demonstrate ray fan simulations and light intensity graphs of light emitted from different components.
Figure 6 schematically shows an embodiment of a light distributor.

### DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person. The sizes of layers and regions are exaggerated for illustrative purposes and, thus, are provided to illustrate the general structures of embodiments of the present invention. Like reference numerals refer to like elements throughout.

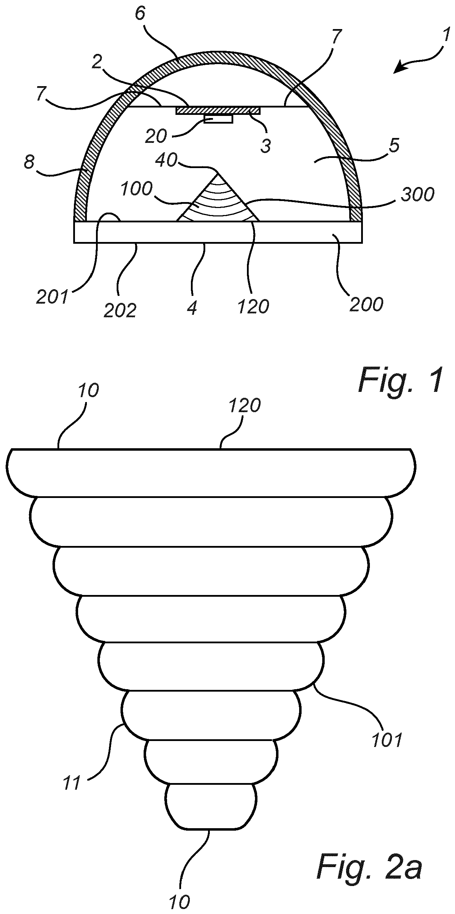

Figure 1 shows a schematic cross-sectional view of an embodiment of a luminaire 1 into which the light distributor 300 is mounted. The light distributor 300 comprises a 3D-printed conical structure 100 arranged on a first surface 201 of a planar structure of the light distributor 200 which is substantially larger than a base 120 of the conical structure 100. The light distributor 300 is arranged within the interior 5 of the luminaire 1 such that a second surface 202 of the planar structure 200 faces outwards from the interior 5 of the luminaire 1. The second surface 201 of the planar structure 200 is the exit surface 4 of the luminaire 1. A light source 20 is arranged between the conical structure 100 and an interior surface 8 of the luminaire 1. The light source 20 is mounted on a first surface 3 of a substrate 2, and aligned with the apex 110 of the conical structure. The substrate 2 is mounted within the luminaire 1 by mechanical means 7.

The substrate may have any optical properties, such as being opaque, translucent, or preferably transparent, or reflective. A transparent substrate 2 will allow for reflected light 26 to traverse through the body of the substrate so that it may reach the highly reflective surface 6 with minimal losses. Alternatively, a reflective substrate 2 may reflect the reflected light 26 back towards the exit surface 4 of the luminaire 1. The substrate may be curved or flat, may be flexible or rigid, and have any form or shape.

The substrate may alternatively be mounted onto the interior surface 8 of the luminaire 1, for instance at the topmost portion of the interior surface 8.

Alternatively, the light source 20 may be directly mounted onto the interior surface 8 of the luminaire 1, eliminating the need for a substrate 2.

The light source may be an LED, or a plurality of LEDs closely packed together.

In the embodiment shown in figure 1, a highly reflective surface 6 is or alternatively, has been arranged on the interior surface 8 of the luminaire 1. Here by highly reflective it is meant the substantially all of the light reaching it is reflected. The reflection is preferably at least 90%, more preferably at least 95% most preferably at least 99%. It may be that the highly reflective surface 6 is a separate element of the luminaire 1, which is positioned to cover the entire interior surface 8 or the luminaire 1, or alternatively positioned at a certain position within the luminaire 1. There may be more than one highly reflective surfaces 8 mounted within the interior 5 of the luminaire 1, preferably at positions towards which the reflected light 26 is directed the most. The highly reflective surface 8 may have any form, for example may be flexible or rigid, and any shape.

The highly reflective surface 6 together with the light distributor 300 define a mixing chamber in which light emitted 22 by the light source 20 is mixed so that light exiting the exit surface 4 of the luminaire 1 is homogenous, with substantially no visible peak intensity from the light source 20.

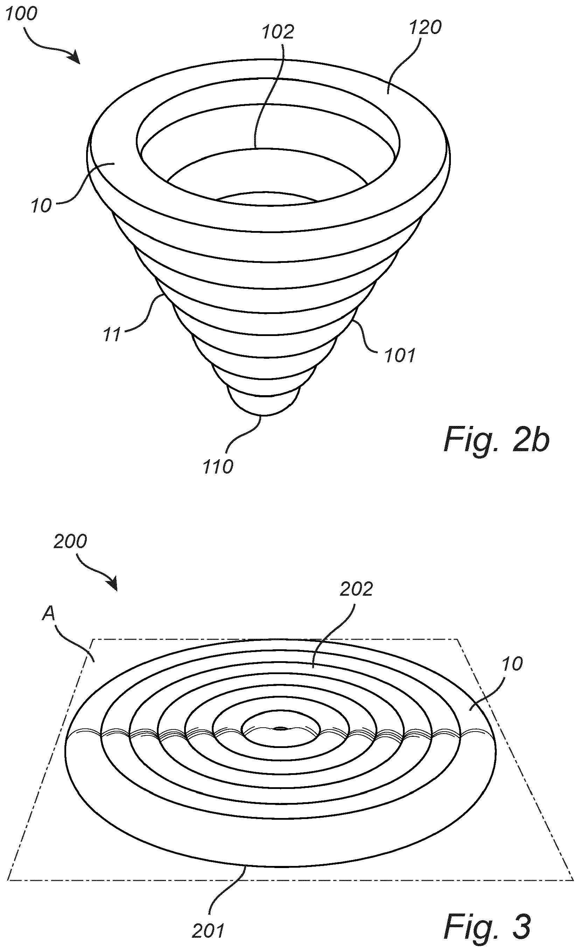

Figure 2a and 2b demonstrate schematic illustrations of a 3D-printed conical structure 100 of a light distributor 300 from the side view, and perspective view respectively. As shown, the conical structure 100 is fabricated by stacking ring shaped printing windings 10 of 3D-printing material on one another with a tapering angle θ, which, in the illustrated example is 45°. The conical structure 100 has an apex 110, and a base 120, with an outer surface 101 and a hollow interior 102. The printing windings 10 have a curvature 11 which is inherent to the extrusion of 3D-printing material.

The 3D-printing material used for printing the conical structure may be a low loss material, i.e. a non-absorbing material. Additionally, the material may be a nonreflective material. The material may be a light transparent material, such as but not limited to transparent polycarbonate.

Figure 3 schematically shows a discoid planar structure 200 being the planar structure of the light distributor 300. The structure 200 shown in figure 2 is manufactured by 3D-printing, with a set of annular printing windings 10 arranged as concentric rings in a plane A. The discoid structure has a first surface 201 and an opposite second surface 202 acting as the exit surface of the light distributor 300.

Alternatively, the planar structure of the light distributor 300 may have a shape other than the discoid structure. For instance, it may have a rectangular shape, for which concentric rectangular printing windings are stacked adjacently. The shape of the planar structure of the light distributor 300 may be defined by the desired shape of the exit window of the luminaire, and the shape of the opening of the luminaires casing.

The material used for 3D-printing the planar structure of the light distributor 300, may be the same material used for the conical structures 100. Alternatively, a different material may be used which has different optical properties. The material may be for instance, light transparent with a different refractive index as that of the conical structures. Alternatively, the material may be light translucent. It may be that the first and/or second surface of the material is manipulated to render the planar structure light translucent.

The first 100 and planar structures 200 of the light distributor 300 may be 3D-printed together and in conjunction, such that they are mechanically attached to one another. Alternatively, the may be printed separately, and later mounted together. The first and second 100, 200 components may then be arranged with a certain separation (as later shown in the embodiment of figure 3) or may be mechanically connected.

Alternatively, the planar structure may not be 3D-printed, and may be for instance a slab with a given shape of transparent or translucent material.

The base 120 of the conical structure 100 may be substantially sized and fitted to the first surface 201 of the discoid structure 200. Alternatively, the planar structure of 200 of the light distributor 300 may be substantially larger than the base 1120 of the conical structure 100.

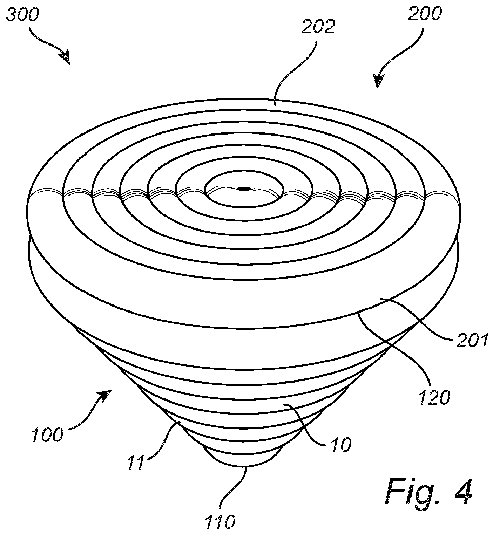

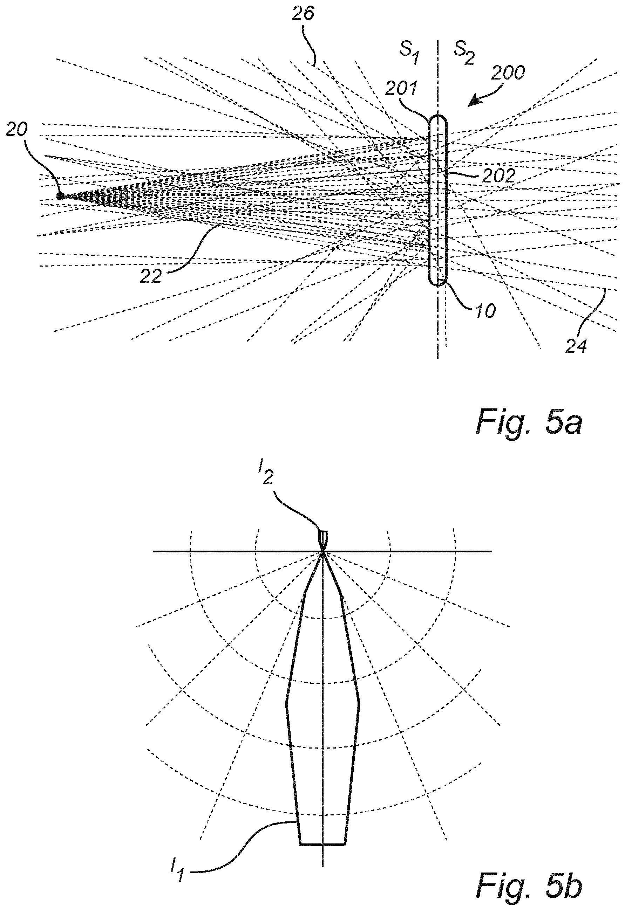

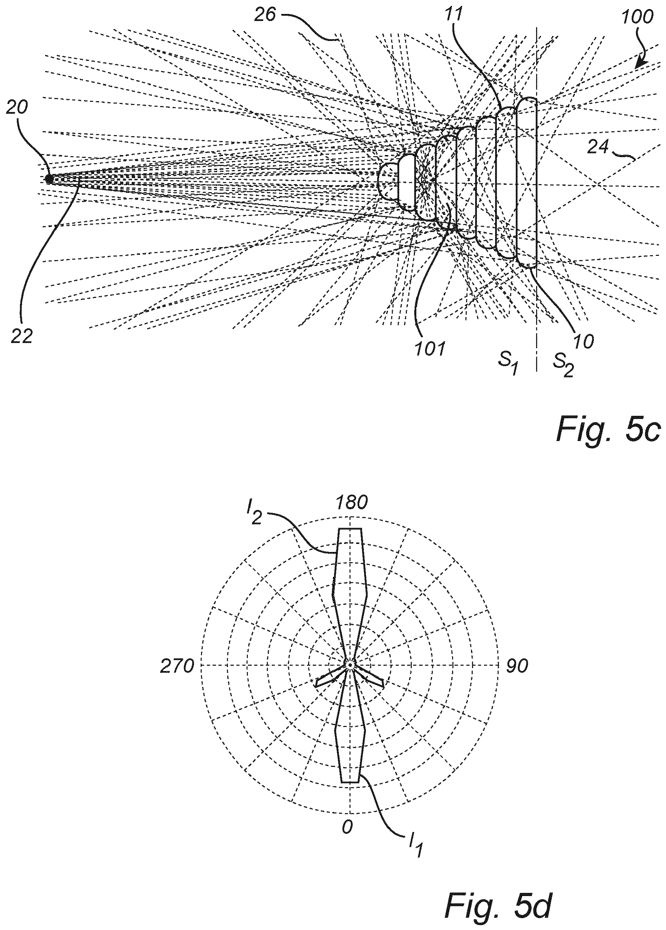

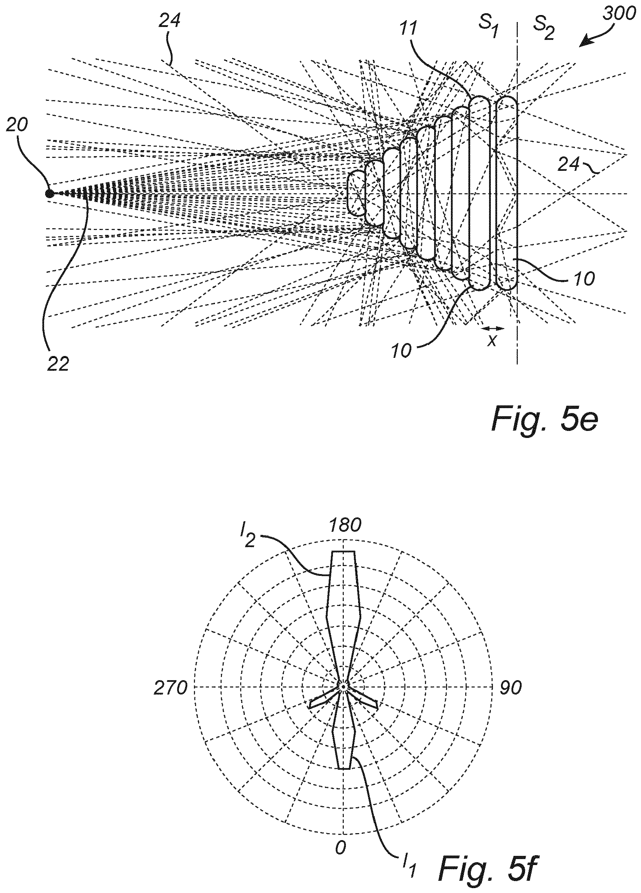

Figure 4 depicts the light distributor 300, formed by the conical structure 100 arranged proximal to the discoid structure 200 such that the base 120 of the conical structure 100 faces the first surface 201 of the discoid structure 200. As observed, in this embodiment, there is a given separation x between the conical structure 100 and the discoid structure 200. Light emitted 22 from a light source 20 may be demonstrated by a ray fan as seen in Figures 5a, 5c, and 5e.

If light emitted from a light point 20 is incident on a flat light transparent surface such as the first surface 201 of the discoid surface 200 shown in figure 4a, most of the light will be refracted and transmitted through the flat structure. This is visible from the ray fan 24 simulation seen on the second side S2, beyond the second surface 202 of the discoid structure 200 shown in figure 5a. In figure 5a some reflected light rays 26 are also visible reflected from the first surface 201 on the first side S1 of the structure 100. However, the small amount of reflection may not be sufficient for realizing the purposes of this invention. This can also be observed in the intensity graph shown in figure 5b. The intensity of light I1 beyond the second surface 202 on the second side S2 of the discoid structure 200, is significantly larger than the intensity of light 12 on the first side S1 of the discoid structure 200 reflected by the first surface 201. This implies that, when arranged within a luminaire with a light source and a highly reflective surface, light exiting the luminaire will not be homogenous.

As a general law of physics, light incident on a surface with a higher refractive index at an angle namely Brewster's angle, depending on the polarization, will undergo negligible or no reflection. For incident light with incident angles smaller than Brewster's angle, light will be mainly transmitted, with low amounts of reflection. However, as the incident angles exceed Brewster's angle, the amount of Fresnel reflections will rapidly increase, approaching 100% reflection at grazing incident angles. Brewster's angle is of course dependent on the refractive indices of the first and second medium.

The inherent curvature 11 of the printing windings 10 will allow for light incident on the outer periphery of the printing winding 10 to coincide with the second medium at angles close to the grazing angle. By stacking ring shaped printing windings 10 on one another forming the conical structure 100, the amount of grazing angle incidences of light 22 emitted by the light source 20 will increase, significantly increasing Fresnel reflections from the outer surface 101 of the conical structure 100. This is shown in figure 5c, in which a light source 20 is arranged proximal and is aligned with the apex 110 of the conical structure 100. Here, the reflected light rays 26 on the first side S1 are higher than the transmitted light rays 24 on the second side S2, and significantly higher than the situation shown in figure 4a with only the discoid structure 200. As the ray fan widens, the angle of incidence will inevitably vary for the outer rays. To have the windings 10 stacked such that the envelope shape of the cone has a 45° tapering angle, will assist in collecting the outer rays of the ray fan with a grazing angle on the curvature 11 of the larger printing windings 10. Light rays traversing the body of the windings, may undergo another reflection at the interface between the winding 10 and the hollow interior 102 of the conical structure 200 depending on the relative angle of incidence at the interface, and the curvature. These light rays may then traverse the body of the winding 10 yet again, possibly reaching the interface between the winding and the ambient at the outer surface 101 of the conical structure. Depending on the angle of incidence and the curvature, the light ray may yet again undergo another reflection, or be transmitted to the first side S1 of the conical structure 200. Alternatively, the light rays incident at the interface of the winding and the interior hollow of 101 of the conical structure 200 may undergo refraction, and be transmitted to the second side S2 of the structure 200.

Figure 5d demonstrates the light intensity graph related to the conical structure 100 shown in figure 5c. As it is observed, the intensity 12 of the transmitted light on the second side S2 of the conical structure 100 is significantly reduced, while the intensity I1 of light on the first side S1 reflected from the outer surface 101 is significantly increased, surpassing 12.

Figure 5e depicts a ray fan simulation of the light distributor 300 of figure 4, while figure 5f shows the intensity graph related to light on either side S1, S2 of this structure 300. As seen in these figures, the light distributor 300 further decreases the amount of transmitted light 24 to the second side S2, decreasing the intensity 12 on the graph of figure 5f, while increasing the amount of reflected light 26, increasing the intensity of light I1 on the first side S1.

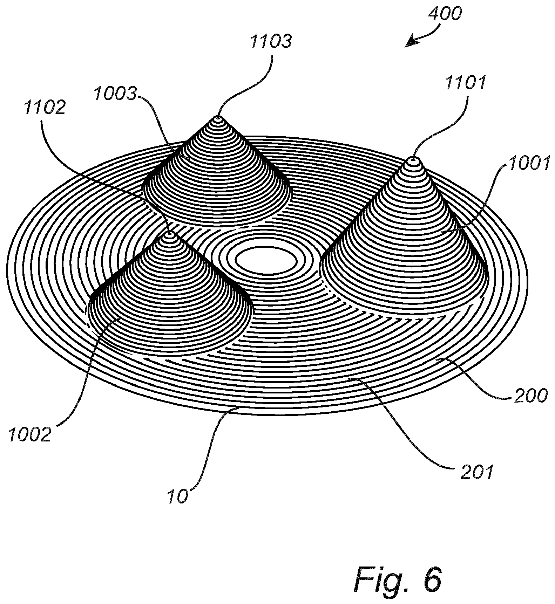

Figure 6 depicts an embodiment of the light distributor 400 in which three conical structures 1001, 1002, 1003 are 3D-printed on the first surface 201 of a 3D-printed discoid structure 200. The apexes 1101, 1102, 1103 can be seen facing upwards in the illustration of figure 5. When installed in the luminaire, for each conical structure 1001, 1002, 1003 a light source may be aligned with its corresponding apex 1101, 1102, 1103.

The person skilled in the art realizes that the present invention by no means is limited to the preferred embodiments described above. On the contrary, many modifications and variations are possible within the scope of the appended claims. For example, at least one tapered structure can be additionally arranged such that its base is proximal to the second surface of the planar structure. Additionally, the luminaire may further comprise a carrier on which the first and planar structures are arranged, having the sole purpose of aligning the optical elements with respect to the light source within the luminaire. Additionally, the light distributor may comprise a plurality of tapered structures stacked on one another, additionally, or alternatively the light distributor may comprise a plurality of planar structures stacked on one another.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A luminaire comprising:
a casing having an interior, and an inner reflective surface facing the interior of the casing,
a light source arranged within the interior of the casing,
an exit window, arranged to allow transmission of light emitted from said light source,
a 3D-printed light distributor enclosed within the interior of the casing and the exit window,
said 3D-printed light distributor comprising:
a tapered structure tapered along an optical axis perpendicular to a base plane and having a base facing the exit window and an apex facing away from the exit window,
said tapered structure formed by a plurality of concentric windings formed by a string of 3D-printing material, each winding having a common base shape, and said string having a curved cross-section,
the plurality of concentric windings stacked on each other and with gradually decreasing cross-area, such that the gradually decreasing windings define a tapering angle of the tapered structure with respect to the base plane, and such that the plurality of windings form a corrugated light redistributing surface facing the interior of the casing and exposed to light emitted from said light source.

2. The luminaire according to claim 1, wherein said tapering angle of the tapered structure is chosen such that an amount of light incident on said corrugated light distributing surface with a grazing angle is maximized.

3. The luminaire according to claim 1, wherein the windings of the tapered structure for a spiral.

4. The luminaire according to claims 1, wherein each of the windings of the tapered structure forms a closed loop.

5. The luminaire according to any of the preceding claims wherein the base of the tapered structure is parallel to said exit window.

6. The luminaire according to claim 1, wherein the light distributor further comprises a 3D-printed planar structure, formed by a plurality of in-plane concentric windings of 3D-printing material stacked adjacent to each other parallel to the base plane, said planar structure having a first surface arranged facing the tapered structure, and a second opposite surface facing away from the interior of the casing.

7. The luminaire according to claim 6, wherein the second surface of the planar structure forms said exit window of the luminaire.

8. The luminaire according to any of the preceding claims, wherein the base shape of said tapered structure is a circle, such that the tapered structure is a conical structure, or wherein said base shape of the tapered structure is a polygon, such that said tapered structure is a pyramidic structure.

9. The luminaire according to any of the preceding claims, wherein said light source is arranged along the optical axis of the tapered structure proximal to the apex.

10. The luminaire according to any of the preceding claims, wherein said light source includes at least one light emitting diode (LED).

11. The luminaire according to preceding claims, wherein the luminaire comprises a plurality of light sources and a plurality of tapered structures.

12. The luminaire according to any of the preceding claims, wherein the light distributor comprises optically transparent material.

13. A method for manufacturing a luminaire, comprising a casing having an interior, a light source, an exit window, and a light distributor, the method comprising the steps of:
3D-printing a tapered structure of the light distributor by extruding concentric windings of 3D-printing material stacked on one another forming a hollow conical or a hollow pyramidic structure, said structure having an apex and a base,
3D-printing a planar structure of the light distributor by extruding windings of 3D-printing material as in-plane concentric rings having a first surface and a opposite second surface,
arranging said apex of the tapered structure facing said light source,
arranging said planar structure adjacent to said tapered structure such that said base of the tapered component is proximal to the first surface of the planar structure,
providing an inner reflective surface facing said interior of the casing of the luminaire, such that said light distributor and said inner reflective surface define a light mixing chamber,
arranging said light source and said light distributor within the interior of the casing, such that the second surface of the planar structure is facing away from said interior of the casing and the light source is enveloped within the light mixing chamber.

14. The method according to claims 13, wherein the planar structure has a discoid structure.

15. The method according to claims 13 or 14, wherein 3D-printing the first and planar structure of the light distributor in conjunction to one another, such that the base of the tapered structure and the first surface of the planar structure are mechanically connected.
